# FASCICULE DE BREVET EUROPEEN

(11) **EP 2 727 313 B1**
(45) Date de publication et mention de la délivrance du brevet: **21.11.2018**
(21) Numéro de dépôt: 12738528.4
(22) Date de dépôt: 26.06.2012
(51) Int. Cl.: H04L 29/06, H04L 29/08, H04L 12/28

(54) **TRANSCODAGE D'UN CONTENU A RESTITUER PAR UN DISPOSITIF DE RESTITUTION DE CONTENUS**
CODEUMSETZUNG EINES MEDIENINHALTS ZUR WIEDERGABE DURCH EINEN WIEDERGABEGERÄT
TRANSCODING OF A CONTENT TO BE RENDERED BY A RENDERING DEVICE

(30) Priorité: 29.06.2011 FR 1155830
(43) Date de publication de la demande: 07.05.2014
(73) Titulaire: Orange, 75015 Paris (FR)
(72) Inventeur: AGRO, Roberto, F-92340 Bourg La Reine (FR)
(86) Numéro de dépôt international: PCT/FR2012/051467
(87) Numéro de publication internationale: WO 2013/001228

(56) Documents cités:
- WO-A1-2008/007872
- WO-A1-2011/039467
- WO-A1-2011/039481
- US-A1- 2005 204 393
- US-A1- 2009 304 019

## Description

L'invention concerne le domaine des dispositifs de restitution de contenus, et plus particulièrement, un procédé de transcodage d'un contenu à restituer par un dispositif de restitution de contenus et un système de transcodage associé.

Dans ce domaine, la compatibilité entre le codec utilisé pour encoder un contenu et les codecs disponibles sur un dispositif de restitution de contenus pose fréquemment problème : un tel dispositif ne pourra en effet lire et restituer ce contenu que s"il est équipé du codec qui permet d'interpréter les données du fichier encodant ce contenu.

Ce problème est au centre des critiques formulées concernant le standard UPnP / DLNA qui définit des dispositifs de restitution normalisés. En effet, un nombre très réduit de codecs sont obligatoires dans ce standard et, par conséquent, il n'est pas garanti que le dispositif de restitution ciblé par un utilisateur dispose des codecs adaptés pour lire et restituer un contenu.

Il existe toutefois des serveurs de contenus UPnP (DMS, Digital Media Server) dotés de fonctions de transcodage, comme le DMS de Microsoft intégré à Windows Media Player ®. Cependant cette solution suppose que les contenus à transcoder soient référencés par ce type de DMS qui, usuellement, fonctionne sur ordinateur personnel. En conséquence, si l'utilisateur possède par ailleurs un DMS intégré dans un équipement de type NAS (Network Attached Storage) lui permettant de stocker ses contenus multimédias et de les partager dans son réseau domestique, il ne pourra pas bénéficier pour les contenus stockés sur le NAS des fonctions de transcodage présentes dans le DMS sur ordinateur personnel. D'autres procédés de transcodage sont connus des demandes de brevet WO2011/039467 A1 et US2005/204393 A1 ; des procédés de substitution et/ou de masquage de dispositifs UPnP sont aussi connus des demandes de brevet WO2011/039481 A1 et WO2008/007872 A1 ; en outre l'inventeur a déposé parallèlement deux demandes tardives offrant des alternatives au transcodage et à la substitution de dispositifs dans les réseaux UPnP: WO2012/175895 A1 publiée le 27.12.2012 revendiquant la date de priorité du 24.06.2011 et WO2012/131276 A1 publiée le 04.10.2012 revendiquant la date de priorité du 31.03.2011.

Un des buts de l'invention est de remédier à des problèmes, inconvénients ou insuffisances de l'état de la technique et/ou d'y apporter des améliorations.

L'invention concerne, selon un premier aspect, un procédé de transcodage d'un contenu à restituer par un premier dispositif de restitution de contenus connecté à un réseau, le procédé étant mis en oeuvre par un système de transcodage et comprenant
- une étape d'émission, suite à une émission via ledit réseau d'un premier message d'annonce de la disparition du réseau du premier dispositif de restitution, d'un message d'annonce signalant la présence dans ledit réseau d'un autre dispositif, dit dispositif de substitution, formant dispositif de restitution de contenus, le dispositif de substitution étant déclaré comme un dispositif de restitution supportant au moins un format de codage non supporté par le premier dispositif de restitution,
- une étape de réception d'un premier ensemble d'au moins un paramètre de restitution d'un contenu à restituer, encodé dans un premier format de codage non supporté par le premier dispositif de restitution,
- une étape d'envoi au premier dispositif de restitution d'un deuxième ensemble d'au moins un paramètre de restitution à utiliser pour obtenir, auprès dudit système de transcodage, ledit contenu à restituer dans un deuxième format de codage supporté par le premier dispositif de restitution.

Selon l'invention, lorsqu'un dispositif de restitution et un système de transcodage sont présents dans le réseau, le système de transcodage annonce la présence un dispositif jouant le rôle de dispositif de restitution après que le premier dispositif de restitution ait été déclaré absent du réseau.

Selon ce procédé, le système de transcodage déclare un dispositif de restitution capable de supporter des formats non supportés par le premier dispositif de restitution substitué tout en faisant appel à ce premier dispositif de restitution de contenus pour la restitution effective des contenus à restituer.

De manière transparente pour les autres entités du réseau, des fonctions de transcodage de contenu sont mises à disposition par l'intermédiaire du système de transcodage qui déclare un dispositif de restitution auprès duquel un contenu à restituer peut être obtenu dans un format de codage approprié pour une restitution par un premier dispositif de restitution.

L'invention propose ainsi un mécanisme de substitution d'un dispositif de restitution par un dispositif du système de transcodage, le premier disparaissant au profit de l'autre. Ce dispositif est vu comme un dispositif de restitution et se substitue au premier dispositif de restitution qui est masqué. Un tel dispositif est en conséquence nommé par la suite dispositif de substitution.

En tant que dispositif de restitution, le dispositif de substitution reçoit des paramètres de restitution concernant des contenus susceptibles d'être restitués par son intermédiaire. Par ce biais, le dispositif de substitution génère des paramètres de restitution modifiés puis transfert au dispositif de restitution substitué les paramètres de restitution modifiés afin que le dispositif de restitution masqué puisse obtenir le contenu à restituer dans un format de codage approprié pour une restitution par ce dispositif de restitution.

Le système de transcodage sert en particulier de serveur de transcodage pour les contenus hébergés par le ou les serveurs de contenus du réseau : chaque dispositif de restitution du réseau peut être masqué à son profit, le système de transcodage pouvant alors systématiquement mettre à disposition, pour tous les contenus à restituer par un dispositif de restitution masqué, de nouveaux formats de codage qui ne seraient pas proposés par les serveurs de contenus du réseau.

En outre, dans l'hypothèse où un utilisateur acquiert et installe dans le réseau plusieurs dispositifs de restitution, le système de transcodage est capable de déclarer plusieurs dispositifs en tant que dispositif de restitution : chaque dispositif ainsi déclaré vient se substituer à un des dispositifs de restitution pour proposer la restitution de contenu dans des formats de codage supplémentaires par rapport à ceux proposés par le dispositif de restitution substitué.

Selon un mode de réalisation du procédé selon l'invention, le premier ensemble comprend une adresse de localisation désignant une entité auprès de laquelle ledit contenu à restituer est susceptible d'être obtenu dans le premier format de codage, le deuxième ensemble comprenant une adresse de localisation désignant le système de transcodage comme entité auprès de laquelle ledit contenu à restituer est susceptible d'être obtenu dans le deuxième format de codage.

Chacune de ces adresses de localisation est utilisée pour accéder au contenu à restituer dans le format de codage associé à cette adresse. En outre, le dispositif de restitution va utiliser toute adresse qui lui est fournie par le dispositif de substitution pour accéder au contenu à restituer sans avoir à se préoccuper du format de codage dans lequel se trouve le contenu localisé à cette adresse. De manière transparente pour ce dispositif de restitution, le contenu est accessible pour lui dans un format de codage qu'il supporte.

Selon un mode de réalisation, le procédé selon l'invention comprend en outre :
- une étape d'obtention auprès dudit premier dispositif de restitution d'une première liste d'au moins un format de codage supporté par le premier dispositif de restitution,
- une étape de génération, à partir de la première liste, d'une deuxième liste d'au moins un format de codage supporté par le dispositif de substitution, comprenant au moins un format de codage non supporté par le premier dispositif de restitution mais susceptible d'être décodé par le système de transcodage et convertit en au moins un format de codage de la première liste.

Le système de transcodage se charge d'établir la liste de formats de codage supporté par le dispositif de substitution du système de transcodage, en tant que dispositif de restitution. Le premier dispositif de restitution est ainsi remplacé par un dispositif de restitution plus performant et déclaré comme tel auprès des autres entités du réseau.

Selon un mode de réalisation, le procédé selon l'invention comprend en outre :
- une étape de réception en provenance du premier dispositif de restitution d'une requête d'accès audit contenu à restituer dans le deuxième format de codage ;
- une étape d'obtention dudit contenu à restituer dans le premier format de codage ;
- une étape de transcodage dudit contenu à restituer du premier format de codage dans le deuxième format de codage
- une étape d'envoi au premier dispositif de restitution dudit contenu à restituer dans le deuxième format de codage.

Le système de transcodage se charge du transcodage du contenu à restituer afin de l'encoder dans un format adapté pour la restitution par le dispositif de restitution masqué.

Selon un mode de réalisation, le procédé selon l'invention comprend en outre une étape de recherche d'un dispositif de restitution de contenus présent dans ledit réseau et une étape d'émission d'une demande de masquage à destination d'au moins un dispositif de restitution trouvé lors de l'étape de recherche, le premier message d'annonce étant émis par ledit premier dispositif de restitution après réception d'une dite demande de masquage.

Dans ce mode de réalisation, le système de transcodage se charge lui-même de rechercher les dispositifs de restitution présents dans le réseau. Il n'est pas nécessaire en particulier de faire intervenir une autre entité UPnP du réseau, comme par exemple un point de contrôle UPnP (« Control Point ») pour détecter la présence de dispositifs de restitution dans le réseau. Si au moins un dispositif de restitution est trouvé, une demande de masquage est envoyée au dispositif trouvé pour provoquer l'envoi dudit premier message d'annonce.

Selon un mode de réalisation du procédé selon l'invention, le premier dispositif de restitution est identifié par une adresse fixe, le procédé comprenant une étape d'émission d'une requête à au moins un dispositif de restitution identifié par une adresse fixe, le premier message d'annonce étant émis par le premier dispositif de restitution après réception d'une dite requête.

Dans ce mode de réalisation, le dispositif de restitution est préalablement identifié au moyen d'une adresse fixe. Il n'est donc pas nécessaire de mettre en oeuvre une phase de recherche de dispositif de restitution.

Selon un mode de réalisation du procédé selon l'invention, le premier message d'annonce est émis par le système de transcodage suite à la réception d'un message d'annonce de la présence dans le réseau dudit dispositif de restitution de contenus.

Dans ce mode de réalisation, aucune phase de recherche n'est nécessaire. Il n'est en outre pas nécessaire de modifier le dispositif de restitution puisqu'il est déclaré absent par une autre entité, en l'occurrence par le système de transcodage.

Selon un mode de réalisation, le procédé selon l'invention comprend en outre une étape d'émission à travers ledit réseau d'un message concernant une description d'au moins un service mis en oeuvre par ledit dispositif de substitution, ladite description incluant la description du ou des services mis en oeuvre par le premier dispositif de restitution de contenus.

Le dispositif de substitution se déclare comme proposant des services mis en oeuvre par le dispositif de restitution masqué : les entités UPnP du réseau peuvent ainsi faire appel à ces services en passant par le dispositif de substitution tout en bénéficiant des fonctions de transcodage du système de transcodage. De manière simplifiée pour l'utilisateur, un seul équipement du réseau est utilisé pour le transcodage de contenus à restituer par un dispositif de restitution du réseau.

Selon un mode de réalisation, le procédé selon l'invention comprend en outre une étape de mise en oeuvre de moyens de détection de la disparition dudit premier dispositif de restitution configurés pour détecter une absence de réception, pendant un intervalle de temps prédéfini, d'un message ou d'une réponse à un message signalant la présence du premier dispositif de restitution.

De cette manière, en cas de disparition du dispositif de restitution masqué, le dispositif de substitution du système de transcodage se déclare également absent du réseau, afin qu'aucune entité UPnP du réseau ne tente de restituer des contenus par son intermédiaire.

Selon un mode de réalisation, les différentes étapes du procédé selon l'invention sont mises en oeuvre par un logiciel ou programme d'ordinateur, ce logiciel comprenant des instructions logicielles destinées à être exécutées par un processeur de données d'un système de transcodage et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'informations lisible par un processeur de données, et comportant des instructions d'un programme tel que mentionné ci-dessus. Le support d'informations peut être n'importe quelle entité ou dispositif capable de stocker le programme.

L'invention concerne, selon un deuxième aspect, un système de transcodage d'un contenu à restituer par un premier dispositif de restitution de contenus connecté à un réseau, comprenant
- des moyens d'émission, suite à une émission via ledit réseau d'un premier message d'annonce de la disparition du réseau du premier dispositif de restitution, d'un message d'annonce signalant la présence dans ledit réseau d'un autre dispositif, dit dispositif de substitution, formant dispositif de restitution de contenus,
   le dispositif de substitution étant déclaré comme un dispositif de restitution supportant au moins un format de codage non supporté par le premier dispositif de restitution,
- des moyens de réception d'un premier ensemble d'au moins un paramètre de restitution d'un contenu à restituer encodé dans un premier format de codage non supporté par le premier dispositif de restitution,
- des moyens d'envoi au premier dispositif de restitution d'un deuxième ensemble d'au moins un paramètre de restitution à utiliser pour obtenir, auprès dudit système de transcodage, ledit contenu à restituer dans un deuxième format de codage supporté par le premier dispositif de restitution.

Les avantages énoncés pour le dispositif selon l'invention sont transposables directement au procédé selon l'invention.

Plus généralement, le système de transcodage selon l'invention comprend des moyens de mise en oeuvre des étapes du procédé selon l'invention.

Selon un mode de réalisation, le système de transcodage est mis en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels, apte à mettre en oeuvre une fonction ou un ensemble de fonctions, selon ce qui est décrit ci-dessous pour le module concerné.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un premier mode de réalisation du procédé selon l'invention ;

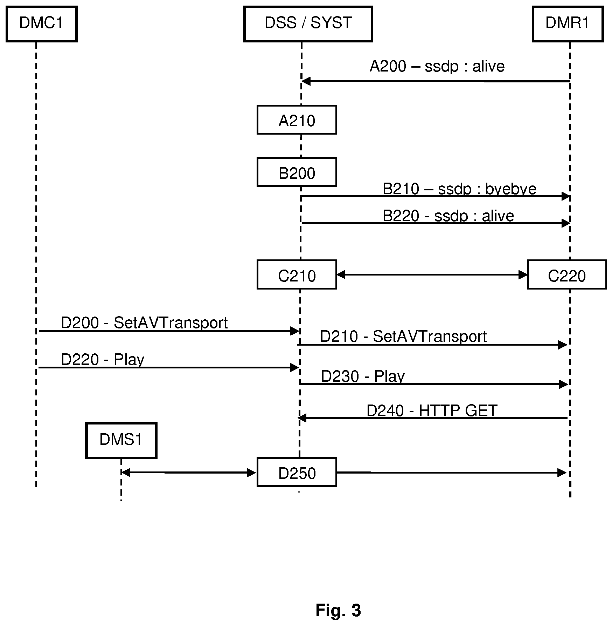

- la figure 3 représente un organigramme d'un deuxième mode de réalisation du procédé selon l'invention.

L'invention est décrite dans le cas de son application à des dispositifs de restitution de contenus sous forme de dispositifs de restitution de contenus conformes au standard UPnP et/ou DLNA, appelés "Digital Media Renderer" ou DMR dans un tel standard. Les contenus concernés sont des contenus numériques, par exemple des contenus multimédia: audio, vidéo, texte, etc.

Le mécanisme de substitution et de transcodage décrit dans ce document est toutefois applicable à des entités qui communiqueraient entre elles au moyen d'un protocole autre que celui protocole défini dans UPnP et/ou DLNA.

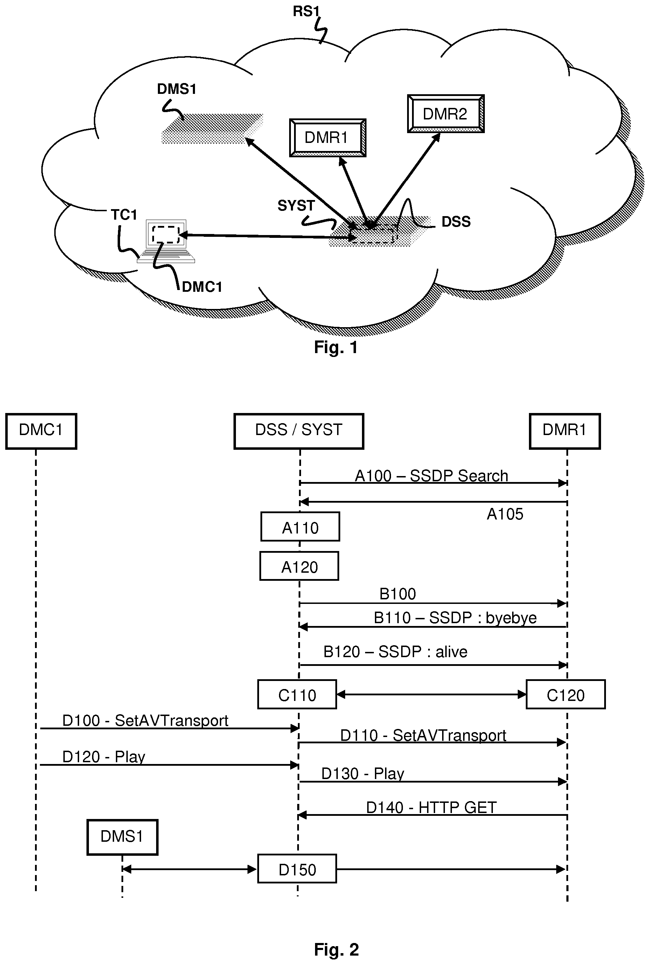

Le système représenté à la figure 1 est organisé autour d'un réseau de communication RS, sous forme de réseau local (LAN, Local Area Network).

Une entité de commande, nommée point de contrôle DMC1 (sous forme de CP, Control Point ou de DMC, Digital Media Controller), conforme au standard UPnP / DLNA est connecté à ce réseau RS.

Un serveur de contenus DMS1 (DMS, Digital Media Serveur), conforme lui aussi au standard UPnP / DLNA, est connecté à ce réseau RS et stocke des contenus à restituer sur un dispositif de restitution.

On suppose à titre d'exemple que deux dispositifs de restitution de contenus DMR1, DMR2, conformes au standard UPnP et/ou DLNA, sont connectés à ce réseau ainsi qu'un système de transcodage SYST, qui est capable de mettre en oeuvre un mécanisme de substitution et de masquage pour un ou plusieurs dispositifs de restitution de contenus connectés au même réseau que lui et qui sert de serveur de transcodage pour ces dispositifs masqués.

Le système de transcodage SYST est par exemple intégré dans une passerelle domestique ou un autre équipement disposant d'une puissance de calcul suffisante pour mettre en oeuvre des fonctions de transcodage en temps réel sur un ou plusieurs contenus.

Le système de transcodage SYST comprend un module MR de recherche, au moins un dispositif de substitution DSS, un module MS de surveillance et au moins un module de transcodage.

### Module de recherche.

Le module MR de recherche du système de transcodage SYST est configuré pour rechercher et détecter la présence de dispositif de restitution au sein du réseau auquel est connecté le système de transcodage SYST, déterminer si un dispositif de restitution trouvé est un dispositif à substituer.

Le module MR de recherche sert en outre à instancier un dispositif de substitution DSS pour chaque dispositif de restitution à substituer détecté. Le système de transcodage SYST est en effet capable de se substituer à un nombre quelconque de dispositifs de restitution. Dans ce but, le module MR de recherche instancie un dispositif de substitution DSS pour chaque dispositif de restitution identifié comme étant à substituer.

### Dispositif de substitution.

Le dispositif de substitution DSS du système de transcodage SYST est un composant logiciel instancié dynamiquement, pour chaque dispositif de restitution ayant été détecté par le module MR de recherche et identifié comme étant à substituer.

Le dispositif de substitution DSS est configuré pour procéder au masquage d'un dispositif de restitution à substituer, puis pour se substituer à ce dispositif de restitution en envoyant un message d'annonce signalant sa présence dans le réseau en tant que dispositif de restitution présentant les mêmes services que ceux proposés par ce dispositif de restitution masqué. Le dispositif de substitution DSS présente cependant une liste enrichie de formats de codage supportés par ce dispositif de substitution DSS, cette liste enrichie comprenant des formats de codage non supportés par le dispositif de restitution masqué.

Le dispositif de substitution DSS met en oeuvre les fonctions d'un dispositif de restitution UPnP (DMR, Digital Media Renderer), à l'exception toutefois de la fonction de rendu par affichage d'images ou émission de signal audio des fonctions de restitution proprement dites, c'est-à-dire que le dispositif de substitution DSS ne comporte pas de moyens d'interface utilisateur pour la restitution de contenus (écran, haut parleur, etc) mais fait appel pour cette fonction aux dispositifs de restitution qu'il masque.

Le dispositif de substitution DSS est notamment configuré pour recevoir et traiter des requêtes UPnP en faisant appel au dispositif de restitution de contenus masqué, afin de mettre en oeuvre la restitution d'un contenu par le dispositif de restitution de contenus masqué.

En particulier, lorsque le dispositif de substitution DSS reçoit, en tant que dispositif de restitution, des paramètres de restitution concernant un contenu à restituer, il modifie ces paramètres de restitution avant de les envoyer vers le dispositif de restitution masqué, de manière à ce que le format de codage spécifié dans ces paramètres de restitution modifiés soit supporté par le dispositif de restitution masqué sur lequel la restitution doit avoir lieu. De manière transparente pour ce dispositif de restitution masqué, la compatibilité entre formats de codage est ainsi assurée. Cette compatibilité est assurée grâce aux modules de transcodage présents dans le système de transcodage SYST, auxquels le dispositif de substitution DSS fait appel pour le transcodage des contenus à restituer.

### Module de surveillance.

Le module MS de surveillance du système de transcodage SYST est configuré pour détecter la disparition éventuelle d'un dispositif de restitution masqué. Le module MS de surveillance sert à mettre fin à l'exécution du dispositif de substitution DSS qui s'est substitué au dispositif de restitution dont la disparition a été détectée.

Le mécanisme de substitution décrit ici peut être appliqué dans tous les cas où on souhaite substituer un dispositif de restitution particulier. Par exemple, un opérateur ayant fourni à un client une STB (Set-top-box), présentant les fonctionnalités d'un dispositif de restitution UPnP mais ne supportant pas certains codecs, peut proposer à ce même client une nouvelle passerelle domestique avec des capacités de transcodage et mettant en oeuvre un système de transcodage selon l'invention en vue d'améliorer la compatibilité entre les fichiers d'un utilisateur et les codecs disponibles pour la restitution d'un fichier.

Cependant, la substitution mise en oeuvre aura de l'intérêt seulement si le système de transcodage permet de traiter des contenus dans des formats de codage qui ne sont pas supportés par le dispositif de restitution considéré. Le procédé de transcodage est donc appliqué en priorité à tout dispositif de restitution qui ne dispose pas de tous les codecs disponibles auprès du système de transcodage SYST. Un dispositif de restitution, candidat à la substitution, est ainsi sélectionné en fonction des formats de codage qu'il supporte.

Dans le cas particulier du standard UPnP / DLNA, cette sélection s'effectue en analysant la propriété « ProtocolInfo » du service « ConnectionManager » du dispositif de restitution candidat à la substitution et en comparant cette propriété avec la liste des formats de codage supportés par le dispositif de substitution DSS instancié grâce aux modules de transcodage disponibles dans le système de transcodage SYST.

Dans une telle situation en effet, un dispositif de substitution DSS du système de transcodage SYST complète la liste du ou des formats de codage supportés par le dispositif de restitution masqué en y ajoutant tous les formats de codage qu'il supporte, c'est-à-dire pour lesquels il dispose au moins d'un module de décodage. Le dispositif de substitution DSS vérifie en outre qu'il est dispose d'au moins un module d'encodage pour encoder un contenu décodé dans un format de codage supporté par le dispositif de restitution masqué.

### Modules de transcodage.

Le système de transcodage SYST comprend ainsi un ou plusieurs modules de transcodage, combinant chacune une fonction de décodage de données dans un premier format de codage et une fonction d'encodage de ces données dans un deuxième format de codage.

De manière connue, la description d'un format de codage d'un contenu audio comprend généralement les paramètres de codage suivant :
- l'algorithme de codage utilisé : MP3, WAV, etc
- la fréquence d'échantillonnage,
- le nombre de bits par échantillon,
- le nombre de voies audio.

De manière connue, la description d'un format de codage d'un contenu vidéo comprend généralement les paramètres de codage suivant :
- l'algorithme de codage utilisé : MPEG2, MPEG4, MWV, etc
- la résolution d'image,
- le nombre d'image par seconde.

Par hypothèse ici, tout changement de l'un quelconque des paramètres de codage d'un contenu aboutit à un format de codage différent et nécessite une fonction de transcodage appropriée. Par exemple, un transcodage d'un contenu vidéo avec changement d'algorithme de codage et en outre un changement de résolution vidéo, nécessitera si besoin l'application successive de deux fonctions de transcodage de base : l'une pour effectuer le changement de résolution, l'autre pour effectuer le changement d'algorithme de codage.

En pratique, le système de transcodage SYST sera équipé d'une pluralité de modules de transcodage, chacun mettant en oeuvre une fonction de transcodage de base, plusieurs fonctions de transcodage de base pouvant ainsi être appliquées successivement à un même fichier de données pour obtenir un format de codage cible. Chaque dispositif de substitution DSS instancié au sein du système de transcodage peut ainsi faire appel à un ou plusieurs modules de transcodage.

Outre les modules fonctionnels définis pour les dispositifs de restitution de contenus dans le standard UPnP et/ou DLNA, le dispositif de restitution de contenus DMR1 comprend un module de masquage MM, configuré pour procéder à l'auto-masquage du dispositif de restitution de contenus DMR1 par envoi d'un message d'annonce déclarant le dispositif de restitution de contenus DMR1 absent dudit réseau. Cette opération de masquage s'effectue par exemple après avoir reçu en provenance du système de transcodage un message constituant une demande de masquage.

### Procédé de transcodage.

Deux modes de réalisation du procédé de transcodage sont décrits ci-dessous. Chacun de ces deux modes de réalisation comprend :
- une phase A de recherche et de détection, à l'issue de laquelle le système de transcodage SYST a détecté la présence d'un dispositif de restitution de contenus à substituer;
- une phase B de masquage et de substitution, lors de laquelle a lieu la substitution du dispositif de restitution de contenus à substituer: le dispositif de restitution de contenus est masqué, puis un dispositif de substitution DSS, instancié pour ce dispositif de restitution, annonce sa présence dans le réseau, en tant que dispositif de restitution, en remplacement de celle du dispositif de restitution masqué;
- une phase C de surveillance, au cours de laquelle un dialogue est établi entre le dispositif de restitution de contenus substitué et le dispositif de substitution DSS afin de détecter la disparition de l'un ou de l'autre et, le cas échéant, de mettre fin au masquage et à la substitution ;
- une phase D de restitution de contenus : le dispositif de substitution DSS répond à des requêtes d'interrogation (actions UPnP) concernant des contenus à restituer puis intervient dans la restitution du contenu sélectionné en coopérant avec le dispositif de restitution masqué.

Les phases A, B et C sont exécutées successivement. La phase D de restitution se déroule toutefois en parallèle avec la phase C de surveillance.

### Premier mode de réalisation.

### Phase A de recherche et de détection.

Dans le premier mode de réalisation, le système de transcodage SYST utilise son module MR de recherche pour détecter la présence dans le réseau RS d'un dispositif de restitution de contenus, en l'occurrence d'un dispositif de restitution de contenus conforme au standard UPnP / DLNA, noté DMR, Digital Media Renderer dans ce standard.

Cette détection s'effectue au moyen de requêtes conformes au protocole SSDP (Simple Service Discovery Protocol).

La phase de recherche, comprenant les étapes A100 à A120, est déclenchée à l'initialisation du système de transcodage SYST, après la connexion du système de transcodage SYST au réseau RS.

A l'étape A100, le module de recherche du système de transcodage SYST émet en mode multicast via le réseau RS un message de recherche de dispositif de restitution de contenus présent dans le réseau RS: ce message de recherche est une requête SSDP "M-SEARCH". Le module de recherche se met ensuite à l'écoute des réponses à cette requête SSDP "M-SEARCH": ces réponses sont émises en mode unicast.

A l'étape A105, suite à l'interception de la requête SSDP "M-SEARCH", le dispositif de restitution de contenus DMR1 envoie en mode unicast via le réseau RS un message de réponse qui comprend:
- un identifiant du dispositif de restitution de contenus DMR1 (identifiant UUID, Universal Unique Identifier ou identifiant UDN, Unique Device Name) et
- une description du ou des services UPnP / DLNA mis en oeuvre par le dispositif de restitution de contenus DMR1, ou un lien vers une telle description.

A l'étape A110, le module de recherche du système de transcodage SYST intercepte le message de réponse et identifie le dispositif de restitution de contenus DMR1 à partir des informations contenues dans ce message de réponse.

En pratique, la réponse à la requête SSDP "M-SEARCH" comprend un lien hypertexte (sous forme d'URL, Uniform Resource Locator) vers un fichier FDMR1 de description (au format XML) du dispositif de restitution de contenus DMR1 et des services UPnP / DLNA mis en oeuvre par ce dispositif de restitution de contenus DMR1.

Si le système de transcodage SYST est initialisé après le dispositif de restitution de contenus DMR1, le dispositif de restitution de contenus DMR1 répondra à la requête SSDP comme décrit ci-dessus.

Cependant si le système de transcodage SYST est initialisé avant le dispositif de restitution de contenus DMR1, le module de recherche n'obtiendra pas de réponse à la requête SSDP "M-SEARCH" lorsqu'elle est envoyée avec l'initialisation du dispositif de restitution. Dans ce cas, au moment où le dispositif de restitution de contenus DMR1 sera initialisé, le module de recherche interceptera un message d'annonce SSDP "alive" que le dispositif de restitution de contenus DMR1 doit envoyer, en mode multicast et de manière périodique, après sa connexion au réseau pour se conformer au mécanisme de découverte prévu dans le standard UPnP / DLNA.

En complément ou en alternative à la réception de message d'annonce SSDP "alive", le système de transcodage SYST envoie de manière périodique un message de recherche, afin de détecter la connexion au réseau RS de nouveaux dispositifs de restitution de contenus.

A l'étape A120, le module de recherche du système de transcodage SYST détermine si le dispositif de restitution de contenus DMR1 est un dispositif à substituer. Les étapes des phases B et C décrites ci-dessous ne sont mises en oeuvre qu'en cas de réponse positive à cette étape de détermination.

Le module de recherche du système de transcodage SYST détermine d'abord si la substitution est utile.

Dans ce but, la propriété « ProtocolInfo » du service « ConnectionManager » du dispositif de restitution DMR1 est extraite du fichier FDMR1 de description que le système de transcodage SYST a obtenu concernant le dispositif de restitution de contenus DMR1. Cette propriété, qui contient une liste de formats de codage supportés par le dispositif de restitution DMR1 est analysée pour déterminer si le système de transcodage SYST supporte au moins un format de codage supplémentaire qui n'est pas supporté par le dispositif de restitution DMR1. Chacun de ces formats de codage supplémentaires correspond à une fonction de décodage et d'encodage disponible, susceptible d'être mise en oeuvre par le système de transcodage SYST. Si au moins un format de stockage supplémentaire est trouvé, le dispositif de restitution de contenus ayant répondu est a priori retenu comme étant un dispositif à substituer.

Le module de recherche du système de transcodage SYST effectue toutefois une vérification supplémentaire pour vérifier que le dispositif de restitution DMR1 trouvé supporte la substitution.

Selon une première variante de réalisation de cette vérification supplémentaire, la requête SSDP "M-SEARCH" émise à l'étape A100 comprend un paramètre "to be substituted" qui indique le type d'entité recherchée: en l'occurrence que le système de transcodage SYST recherche uniquement les dispositifs de restitution de contenus à substituer et/ou configurés pour pouvoir être substitué. En conséquence, le système de transcodage SYST détermine à l'étape A120 qu'il s'agit d'un dispositif de restitution de contenus qui répond à ce critère de recherche lorsqu'il reçoit une réponse à une requête SSDP "M-SEARCH" avec paramètre "to be substituted".

Le protocole SSDP permet en effet de rechercher des entités selon leur type (ici, le type est dispositif de restitution de contenus) ou selon leur identifiant (UUID pour Universal Unique Identifier ou UDN pour Unique Device Name). Le paramètre "to be substituted" ainsi ajouté à la requête SSDP sera ignoré par les entités UPnP / DLNA de type DMC ou DMP mais sera interprété et exploité par le système de transcodage SYST.

Selon une deuxième variante de réalisation de cette vérification supplémentaire, cette détermination s'effectue à partir de la réponse à la requête SSDP "M-SEARCH", en déterminant si dans la description du dispositif de restitution de contenus émettant cette réponse se trouve une propriété "to be substituted" qui indique que le dispositif de restitution de contenus en question est un dispositif de restitution de contenus à substituer et/ou configuré pour mettre en oeuvre cette substitution.

Le système de transcodage SYST obtient dans ce but le fichier de description FDMR1 et analyse ce fichier pour y rechercher la propriété "to be substituted".

En alternative, au lieu de rechercher la propriété "to be substituted", le système de transcodage SYST analyse le fichier FDMR1 de description pour y rechercher si l'alias ("friendly name") du dispositif de restitution de contenus et/ou le nom du modèle ("ModelName") du dispositif de restitution de contenus et/ou le numéro du modèle ("ModelNumber") et/ou une autre propriété du dispositif de restitution de contenus répond à un critère donné indiquant que le dispositif de restitution de contenus peut être substitué par un système de transcodage. Dans cette alternative, il n'est pas nécessaire d'ajouter de propriété supplémentaire à la description d'un dispositif de restitution de contenus.

### Phase B de masquage et de substitution.

La phase de recherche, comprenant les étapes B100 à B120, est déclenchée en cas de réponse positive obtenue à l'étape A120.

A l'étape B100, le module MR de recherche instancie un dispositif de substitution DSS destiné à se substitué au dispositif de restitution DMR1 trouvé lors de la phase A. Le module MR de recherche transmet au dispositif de substitution DSS un identifiant du dispositif de restitution DMR1 à masquer ainsi que le fichier de description FDMR1 obtenu pour ce dispositif de restitution.

Puis, le dispositif de substitution DSS envoie, au dispositif de restitution de contenus DMR1 trouvé lors de la phase A de recherche, une demande de masquage afin que le dispositif de restitution de contenus DMR1 se déclare absent du réseau RS. Cette demande de masquage est envoyée sous forme par exemple une requête UPnP ou bien une requête de type "web service".

A l'étape B110, à réception d'une telle demande de masquage en provenance du système de transcodage SYST, le dispositif de restitution de contenus DMR1 envoie en mode multicast via le réseau RS un message d'annonce de son départ du réseau, sous forme de message SSDP "byebye". En outre, le dispositif de restitution de contenus DMR1 désactive l'envoi en mode multicast de messages d'annonces SSDP "alive" qu'il est censé émettre périodiquement.

A l'étape B120, le système de transcodage SYST émet en mode multicast via le réseau RS un message d'annonce, sous forme de message SSDP "alive" signalant la présence du dispositif de substitution DSS dans ce réseau.

Ce message d'annonce comprend un identifiant de dispositif affecté au dispositif de substitution DSS (identifiant UUID, Universal Unique Identifier ou identifiant UDN, Unique Device Name) ainsi qu'un lien hypertexte vers un fichier FADMR de description (au format XML) du dispositif de substitution DSS et des services UPnP / DLNA proposé par ce dispositif de substitution DSS.

Cette description inclut une description du ou des services mis en oeuvre par le dispositif de restitution DMR1 masqué : elle est générée à partir du fichier FDMR1 de description du dispositif de restitution DMR1, dans lequel chaque URL associée à un service UPnP est modifiée de manière à pointer vers le dispositif de substitution DSS au lieu de pointer vers le dispositif de restitution DMR1.

La description est toutefois modifiée en ce qui concerne la propriété « ProtocolInfo » du service « ConnectionManager » du dispositif de restitution DMR1.

Cette propriété, qui contient une liste de formats de codage supportés par le dispositif de restitution DMR1, est enrichie avec un ou des formats de codage supplémentaires, correspondant aux formats de codage supportés par le système de transcodage SYST qui ne sont pas supportés par le dispositif de restitution DMR1. Chacun de ces formats de codage supplémentaires correspond à une fonction d'encodage disponible, susceptible d'être mise en oeuvre par les modules de transcodage du système de transcodage SYST.

### Phase C de surveillance.

Les étapes C110 et C120 de la phase C sont exécutées en parallèle, l'une par le module de surveillance MS du système de transcodage SYST et l'autre par le module de surveillance MS1 du dispositif de restitution de contenus DMR1.

A l'étape C110, le module de surveillance MS du système de transcodage SYST met en oeuvre un processus de surveillance afin de détecter la disparition du dispositif de restitution de contenus DMR1.

Dans ce but, le module de surveillance MS du système de transcodage SYST s'abonne auprès du dispositif de restitution de contenus DMR1 à des événements de présence, à envoyer en mode unicast sous forme de messages d'annonce SSDP "alive".

Le dispositif de restitution de contenus DMR1 est configuré pour émettre périodiquement de tels messages d'annonces via le réseau RS. Mais au lieu d'envoyer ces messages d'annonce en mode multicast, ces messages seront envoyés en mode unicast, à destination seulement du module de surveillance MS du système de transcodage SYST: ainsi le dispositif de restitution de contenus DMR1 reste masqué pour toutes les entités UPnP du réseau RS mais signale sa présence uniquement au module de surveillance MS du système de transcodage SYST, afin que ce dernier soit en mesure de détecter la disparition du dispositif de restitution de contenus DMR1. En effet, l'équipement mettant en oeuvre le dispositif de restitution de contenus DMR1 peut être éteint électriquement par un utilisateur ou mis en veille. Il est donc nécessaire que le système de transcodage SYST puisse détecter la disparition du dispositif de restitution de contenus DMR1, c'est-à-dire sa déconnexion du réseau RS.

Le module de surveillance MS met en oeuvre une fonction de détection de cette disparition, qui est configurée pour détecter :
- soit une absence de réception, pendant un intervalle de temps prédéfini, correspondant à la périodicité d'émission des messages d'annonces en mode unicast, d'un message d'annonce SSDP "alive" signalant la présence du dispositif de restitution de contenus DMR1; et
- soit la réception d'un message d'annonce SSDP "byebye" signalant la disparition du dispositif de restitution de contenus DMR1.

Sur détection de la disparition d'un dispositif de restitution, le module de surveillance MS met fin à l'exécution du dispositif de substitution DSS qui s'est substitué au dispositif de restitution dont la disparition a été détectée : dans l'exemple décrit ici, il s'agit de la disparition du dispositif de restitution DMR1. Ce dispositif de substitution DSS est identifié grâce à l'identifiant (UUID, Universal Unique Identifier ou UDN, pour Unique Device Name) contenu dans les messages SSDP "alive" ou "byebye".

Le dispositif de substitution DSS émet préalablement un message d'annonce SSDP « byebye » en mode multicast pour signaler son départ auprès des entités de commandes UPnP du réseau RS (DMC et/ou DMP) présents. Ces entités cessent alors de s'adresser au dispositif de substitution DSS.

A l'étape C120, le dispositif de restitution de contenus DMR1 met en oeuvre un processus de surveillance afin de détecter la disparition du dispositif de substitution DSS ou de celle du système de transcodage SYST. Ceci est nécessaire pour que le dispositif de restitution de contenus puisse, suite à une telle disparition, être à nouveau utilisé directement par les entités de commandes UPnP du réseau RS (DMC et/ou DMP présents).

Dans ce but, le dispositif de restitution de contenus DMR1 comprend un module de surveillance MS1 configuré pour détecter des messages d'annonce, émis par le dispositif de substitution DSS. Plusieurs variantes de réalisation sont possibles.

Dans une première variante, les messages d'annonce détectés par le module de surveillance MS1 sont des messages d'annonce de départ, sous forme de messages SSDP de type « byebye », émis en mode multicast, qu'un dispositif UPnP doit émettre à sa déconnexion du réseau. Dans cette première variante, le dispositif de restitution de contenus DMR1 détecte la disparition du dispositif de substitution DSS en cas d'émission d'un message d'annonce « byebye » émis en mode multicast par le dispositif de substitution DSS. Cette première variante n'est pas performante dans le cas où l'équipement incorporant le système de transcodage SYST est éteint électriquement sans avoir eu le temps d'envoyer de message d'annonce.

Dans une deuxième variante, les messages d'annonce détectés par le module de surveillance MS1 sont des messages d'annonce de présence, sous forme de messages SSDP de type « alive » qu'un dispositif UPnP émet à intervalle de temps périodique. Dans cette deuxième variante, si le dispositif de substitution DSS n'émet pas de message d'annonce « alive » pendant une durée déterminé, le dispositif de restitution de contenus DMR1 détecte la disparition du dispositif de substitution DSS.

Cette deuxième variante n'est pas performante dans le cas où l'intervalle de temps entre deux émissions de messages d'annonce est trop long : supérieur à 5 ou 10 minutes. En effet, les messages ssdp:alive sont émis en général toutes les 10 ou 15 mn.

Ainsi, la détection de la disparition du dispositif de substitution DSS peut se produire avec plusieurs minutes de retard et la restitution d'un contenu via ce dispositif de substitution DSS génèrera alors des erreurs.

Chacun de ces messages d'annonce peut ainsi être remplacé par un message d'appel d'une fonction d'un service Web mis en oeuvre par le dispositif de restitution de contenus DMR1, qui peut alors détecter une absence d'appel de cette fonction.

Dans une troisième variante, les messages d'annonce détectés par le module de surveillance MS1 sont des messages de réponse, émis conformément à un autre protocole, en réponse à une requête émise périodiquement par le module de surveillance MS1 du dispositif de restitution de contenus DMR1.

Après émission d'une telle requête, le module de surveillance MS1 déclenche une temporisation de courte durée, par exemple inférieure à 1 minute: si à l'expiration de cette temporisation, le module de surveillance MS1 n'a reçu aucun message de réponse à sa requête, il détecte la disparition du dispositif de substitution DSS. Cette troisième variante permet une détection rapide (à la minute près, si la temporisation est de 1 minute ou inférieure) de la disparition du dispositif de substitution DSS.

Lorsque le dispositif de restitution de contenus DMR1 a détecté, selon l'une quelconque de ces trois variantes, la disparition du dispositif de substitution DSS, il émet à nouveau un message d'annonce SSDP « alive » en mode multicast pour signaler sa présence auprès des entités de commandes UPnP du réseau RS (DMC et/ou DMP présents. Ces entités peuvent alors piloter directement le dispositif de restitution de contenus DMR1, sans passer par l'intermédiaire du dispositif de substitution DSS. En outre, dispositif de restitution de contenus DMR1 réactive l'émission périodique des messages d'annonce « ssdp : alive ».

### Phase D d'invocation d'actions et de restitution de contenu.

Lors de cette phase D, étant donné que le dispositif de restitution DMR1 masqué n'est plus "visible" par les points de contrôle du réseau RS1, les requêtes UPnP émises par les points de contrôle pour piloter le dispositif de restitution DMR1 parviennent au dispositif de substitution DSS du système de transcodage SYST qui s'est substitué à ce dispositif de restitution DMR1. Lors de cette phase :
- les requêtes (actions UPnP) provenant d'un point de contrôle DMC1 et parvenant au dispositif de substitution DSS sont relayées vers le dispositif de restitution DMR1 masqué, à l'exception toutefois des requêtes concernant le service « AVTransport » et le service « ConnectionManager » du dispositif de restitution DMR1 qui sont traitées comme décrit ci-dessous ;
- les réponses à ces requêtes (actions UPnP) émises par le dispositif de restitution DMR1 masqué sont relayées vers le point de contrôle DMC1 concerné via le dispositif de substitution DSS du système de transcodage SYST;
- les notifications d'événement émises par le dispositif de restitution DMR1 masqué sont elles publiées via le réseau RS1 par le dispositif de substitution DSS.

En outre, lors de la restitution proprement dite d'un contenu fourni par un serveur de contenu quelconque, le dispositif de substitution DSS intervient si besoin pour effectuer un transcodage du contenu à restituer. Le dispositif de substitution DSS se place alors en coupure de flux entre le serveur de contenus, source du flux de données à restituer, et le dispositif de restitution DMR1 masqué, destinataire flux de données à restituer.

On suppose qu'un utilisateur U1 du point de contrôle DMC1 a sélectionné un contenu à restituer et a demandé à déclencher la restitution de ce contenu à partir du point de contrôle DMC1, qui émet alors des requêtes de configuration vers le service « AVTransport » du dispositif de substitution DSS, afin de préparer puis déclencher cette restitution. Le traitement de ces requêtes s'effectue comme suit.

Lors de l'étape D100, le point de contrôle DMC1 émet une première requête comprenant des paramètres de restitution du contenu sélectionné à restituer : le point de contrôle DMC1 invoque l'action « SetAVTransportURI » du service « AVTransport » du dispositif de substitution DSS, avec les paramètres suivants :
- « itemURI » qui identifie le contenu à restituer et sa localisation au moyen d'une adresse de type URI (Uniform Resource Identifier) ; cette adresse de localisation est notée URI1; elle désigne par exemple le serveur de contenus DMS1 comme entité auprès de laquelle le contenu est susceptible d'être obtenu dans le premier format de codage ;
- « itemMetadata » qui comprend des métadonnées du contenu à restituer.

Le dispositif de substitution DSS reçoit donc une adresse de localisation d'un contenu à restituer, encodé dans un premier format de codage.

Le paramètre « itemMetadata » étant optionnel dans la norme, il peut être absent d'une telle action.

Lors de l'étape D110, le dispositif de substitution DSS détermine si ce premier format de codage est supporté par le dispositif de restitution DMR1 et donc si un transcodage du contenu à restituer est nécessaire ou si le dispositif de restitution DMR1 est capable de restituer ce contenu sans transcodage. Cette détermination s'effectue comme suit.

Si le paramètre « itemMetadata » est présent et si le format de codage du contenu à restituer est spécifié dans ces métadonnées (attribut « ProtocolInfo »), ce format de codage est analysé afin de déterminer si un transcodage de ce contenu est nécessaire ou si le dispositif de restitution DMR1 est capable de restituer ce contenu sans transcodage. Dans ce but, le dispositif de substitution DSS compare l'attribut « ProtocolInfo » avec la propriété « ProtocolInfo » présente dans la description du service « ConnectionManager » du dispositif de restitution DMR1, déterminant ainsi si le premier format de codage est dans la liste des formats de codage supporté par le dispositif de restitution DMR1.

Si, au contraire, le paramètre « itemMetadata » n'est pas présent dans la requête reçue ou si l'attribut « ProtocolInfo » n'est pas précisé, le dispositif de substitution DSS émet une requête HTTP en utilisant l'adresse « itemURI » fournie afin d'obtenir des données du fichier encodant le contenu. Le dispositif de substitution DSS analyse ensuite le format du contenu à restituer à partir des données d'entêtes du fichier ainsi obtenu afin de déterminer si un transcodage de ce contenu est nécessaire ou si le dispositif de restitution DMR1 est capable de restituer ce contenu sans transcodage.

En alternative, cette requête HTTP d'obtention de contenu est émise systématiquement par le dispositif de substitution DSS indépendamment de la présence ou de l'absence du paramètre « itemMetadata » dans la requête reçue.

Lors de l'étape D110, le dispositif de substitution DSS envoie au dispositif de restitution DMR1 une adresse de localisation qui désigne une entité auprès de laquelle le contenu transcodé est susceptible d'être obtenu dans un format de codage supporté par le dispositif de restitution DMR1: le dispositif de substitution DSS relaie l'action « SetAVTransportURI » reçue à l'étape D100 vers le service « AVTransport » du dispositif de restitution DMR1.

S'il a été déterminé à l'étape D100 que le dispositif de restitution DMR1 est capable de restituer le contenu sélectionné pour la restitution sans transcodage, l'action « SetAVTransportURI » reçue à l'étape D100 est relayée avec les mêmes paramètres vers le service « AVTransport » du dispositif de restitution DMR1, c'est-à-dire avec l'adresse de localisation URI1 originale, désignant un serveur de contenus auprès duquel le contenu est susceptible d'être obtenu dans le premier format de codage supporté par le dispositif de restitution DMR1.

Si, au contraire, il a été déterminé à l'étape D100 qu'un transcodage est requis, le dispositif de substitution DSS initialise un module de transcodage à utiliser pour convertir le contenu à restituer dans un deuxième format de codage supporté par le dispositif de restitution DMR1.

Le dispositif de substitution DSS génère en outre une nouvelle adresse de localisation de type URI, notée A-URI1 à utiliser pour obtenir auprès du système de transcodage SYST le contenu à restituer dans ce deuxième format de codage, après transcodage par le système de transcodage SYST au moyen du module de transcodage initialisé.

Puis l'action « SetAVTransportURI » reçue à l'étape D100 est relayée par le dispositif de substitution DSS vers le service « AVTransport » du dispositif de restitution DMR1 avec :
- dans le paramètre « itemURI », l'adresse de localisation A-URI1 modifiée, en remplacement de l'adresse URI1 originale, et
- dans le paramètre « itemMetadata» éventuellement présent, les métadonnées originales non modifiées.

Toutefois, lorsque dans les métadonnées se trouve l'adresse URI1 originale, ces métadonnées seront modifiées en remplaçant l'adresse URI1 originale par l'adresse de localisation A-URI1 modifiée.

L'adresse de localisation A-URI1 modifiée désigne le système de transcodage SYST comme entité auprès de laquelle le contenu à restituer peut être obtenu dans le deuxième format de codage, après transcodage par le système de transcodage SYST, au moyen du module de transcodage initialisé. Cette adresse modifiée comprend l'adresse IP de l'équipement (en l'occurrence, la passerelle GW) intégrant le système de transcodage SYST et le numéro de port de communication affecté au dispositif de substitution DSS.

Avantageusement, cette adresse modifiée comprend l'adresse URI1 originale du contenu. Par exemple, si l'adresse originale du fichier de données URI1 est : http://192.168.1.10: 10243/Kalimba.mp3
où 192.168.1.10 est l'adresse IP du serveur de contenus mettant à disposition ce contenu, alors l'adresse de localisation du fichier de données transcodé pouvant être obtenu auprès du système de transcodage SYST sera de la forme : http://192.168.1.12: 10243/Kalimba.wma?source_uri=http://192.168.1.10:10243/Kalimba.mp3
où : « 192.168.1.12 » est l'adresse IP de l'équipement intégrant le système de transcodage SYST et « 10243 » le numéro de port affecté au dispositif de substitution DSS.

En alternative, l'adresse URI originale est stockée dans le dispositif de substitution DSS en association avec un identifiant présent dans cette adresse de localisation modifiée.

Quelle que soit l'alternative choisie pour cette adresse de localisation modifiée, le dispositif de substitution DSS est en mesure, à réception d'une requête HTTP contenant cette adresse A-URI1 modifiée, de retrouver l'adresse URI1 originale.

Lors de l'étape D120, le point de contrôle DMC1 émet une deuxième requête qui déclenche la restitution du contenu sélectionné : le point de contrôle DMC1 invoque l'action « Play » du service « AVTransport » du dispositif de restitution DMR1.

Lors de l'étape D130, le dispositif de substitution DSS relaie l'action « Play » reçue à l'étape D100 vers le service « AVTransport » du dispositif de restitution DMR1.

Lors de l'étape D140, le dispositif de restitution DMR1 émet une requête HTTP GET pour obtenir les données d'un fichier encodant le contenu à restituer : il utilise dans ce but l'adresse reçue dans le paramètre « itemURI » de l'action « SetAVTransportURI » reçue à l'étape D110.

Lors de l'étape D150, le dispositif de restitution DMR1 reçoit les données du contenu.

Si l'adresse reçue à l'étape D110 dans le paramètre « itemURI » est l'adresse originale du contenu, c'est-à-dire l'adresse désignant le serveur de contenus référençant le contenu à restituer comme entité auprès de laquelle le contenu à restituer peut être obtenu, alors la requête HTTP GET est reçue par ce serveur de contenus, qui, de manière connue, renvoie les données du contenu.

Si l'adresse reçue à l'étape D110 dans le paramètre « itemURI » est une adresse modifiée par le dispositif de substitution DSS, c'est-à-dire une adresse désignant le système de transcodage SYST comme entité auprès de laquelle le contenu à restituer peut être obtenu, alors la requête HTTP GET est reçue par ce système de transcodage SYST.

A réception de cette requête HTTP GET, le dispositif de substitution DSS retrouve l'adresse URI1 originale, c'est-à-dire l'adresse désignant le serveur de contenus référençant le contenu à restituer comme entité auprès de laquelle le contenu à restituer peut être obtenu.

Puis le dispositif de substitution DSS émet une requête HTTP GET vers ce serveur de contenus et obtient en retour les données du contenu. Le dispositif de substitution DSS transcode à la volée le contenu en utilisant le module de transcodage initialisé à l'étape D110 et envoie les données du contenu transcodé au dispositif de restitution DMR1.

### Deuxième mode de réalisation

### Phase A de recherche et de détection.

La phase de recherche, comprenant une étape A200 est déclenchée à l'initialisation du module de recherche MR du système de transcodage.

A l'étape A200, le module MR de recherche du système de transcodage SYST détecte une émission dans le réseau d'un message d'annonce, sous forme de message SSDP « alive », de la présence dans le réseau d'un dispositif de restitution, message d'annonce émis par le dispositif de restitution DMR1 lorsqu'il se connecte au réseau RS.

A l'étape A210, le module de recherche du système de transcodage SYST détermine si une substitution est utile.

Dans ce but, la propriété « ProtocolInfo » du service « ConnectionManager » du dispositif de restitution DMR1 est extraite du fichier FDMR1 de description que le système de transcodage SYST a obtenu concernant le dispositif de restitution de contenus DMR1. Cette propriété, qui contient une liste de formats de codage supportés par le dispositif de restitution DMR1 est analysée pour déterminer si le système de transcodage SYST supporte au moins un format de codage supplémentaire qui n'est pas supporté par le dispositif de restitution DMR1. Chacun de ces formats de codage supplémentaires correspond à une fonction de décodage et d'encodage disponible, susceptible d'être mise en oeuvre par le système de transcodage SYST. Si au moins un format de stockage supplémentaire est trouvé, le dispositif de restitution de contenus ayant répondu est a priori retenu comme étant un dispositif à substituer.

### Phase B de masquage et de substitution.

La phase B de masquage et de substitution, comprenant les étapes B200 à B220, est déclenchée lorsqu'il a été déterminé à l'étape A210 que la substitution était utile.

Dans ce mode de réalisation de la phase B, le dispositif de restitution DMR1 est masqué par le dispositif de substitution DSS sans qu'aucune modification du dispositif de restitution DMR1 par rapport à ce qui est défini dans le standard UPnP / DLNA n'est nécessaire pour la mise en oeuvre du masquage.

A l'étape B200, le module MR de recherche instancie un dispositif de substitution DSS destiné à se substitué au dispositif de restitution DMR1 ayant émis à l'étape A200 le message d'annonce SSDP « alive ». Le module MR de recherche transmet au dispositif de substitution DSS un identifiant du dispositif de restitution DMR1 à masquer ainsi que le fichier de description FDMR1 obtenu auprès du dispositif de restitution DMR1 à masquer.

A l'étape B210, le dispositif de substitution DSS émet un message d'annonce, sous forme de message SSDP "byebye", pour déclarer le dispositif de restitution DMR1 absent du réseau: ce message d'annonce utilise l'identifiant affecté au dispositif de restitution DMR1, identifiant qui a été utilisé par ce même dispositif de restitution DMR1 pour se déclarer présent. Pour les autres entités UPnP du réseau, ce dispositif de restitution DMR1 est considéré dès lors comme ayant disparu du réseau. En outre, comme le dispositif de restitution DMR1 doit envoyer périodiquement en mode multicast de messages d'annonces SSDP "alive", cet envoi de message d'annonce de disparition sera répété également périodiquement.

L'étape B220 suivante est identique à l'étape B120 du premier mode de réalisation.

### Phases C et D.

Dans le deuxième mode de réalisation, les phases C et D sont identiques à celles du premier mode de réalisation

### Autres modes de réalisation

L'invention a été décrite dans le cas de l'utilisation du protocole SSDP pour la mise en oeuvre des phases A, B ou C. Tout autre protocole est toutefois utilisable : par exemple des envois de requêtes de type Web Service sont envisageables, à l'exception toutefois des étapes B110 et B120 qui doivent utiliser des messages SSDP si l'on veut que des entités UPnP standardisées interprètent correctement les messages d'annonce émis lors de ces étapes et comprennent qu'il s'agit respectivement la disparition du dispositif de restitution de contenus et l'apparition du dispositif de substitution DSS. Il en est de même pour la détection de la disparition du dispositif de substitution DSS ou du serveur de contenus dans la phase C.

La phase A de recherche peut en outre être supprimée si le dispositif de restitution de contenus à substituer est préalablement identifié par une adresse IP fixe et que le système de transcodage envoie au démarrage une requête initiale à cette adresse fixe pour déclencher l'opération de masquage de ce dispositif de restitution de contenus.

L'invention permet de manière transparente pour l'utilisateur d'augmenter le nombre de formats de codage, et donc le nombre de contenus qu'un dispositif de restitution va pouvoir restituer.

Le système de transcodage SYST est capable, au moyen du mécanisme selon l'invention, de se substituer à un nombre quelconque de dispositifs de restitution de contenus sous réserve de disposer des ressources matérielles et/ou logicielles (puissance de calcul, mémoire, etc) nécessaires au traitement simultané de plusieurs contenus à restituer.

Une procédure de gestion de charge est avantageusement mise en place pour tenir compte des capacités limitées de transcodage de l'équipement intégrant le système de transcodage SYST.

Cette procédure consiste, d'une part, à détecter que les ressources de transcodage de l'équipement sont toutes utilisées ou sont utilisées au-delà d'un seuil donné, et, d'autre part, à informer le ou les points de contrôle du réseau du fait que les formats de codage supplémentaires, apportés par le système de transcodage SYST grâce à ses fonctions de transcodage, ne sont plus supportés par le système de transcodage.

Pour détecter que les ressources de l'équipement sont toutes utilisées ou sont utilisées au-delà d'un seuil donné, le système de transcodage SYST détecte par exemple que le nombre de fichiers de données en cours de transcodage a atteint une valeur maximale fixée à l'avance : 4 fichiers par exemple.

Pour informer le ou les points de contrôle du réseau du fait que les formats de codage supplémentaires ne sont plus supportés par le système de transcodage SYST, le système de transcodage SYST envoie, en cas de détection de l'utilisation de toutes les ressources disponibles, une notification d'événement UPnP afin de publier un nouvel attribut « ProtocolInfo » du service « ConnectionManager » du ou des dispositif de substitution DSS instanciés : cet attribut serait égal dans ce cas à celui du dispositif de restitution masqué. Cette mise à jour permet de notifier le ou les points de contrôle du réseau du fait que certains formats de codage ne sont plus supportés par le ou les dispositif de substitution DSS instanciés . Ceci évite de solliciter inutilement les ressources du système de transcodage SYST et rend inaccessible les fonctions de transcodage correspondant aux formats qui n'apparaîtront plus dans l'attribut « ProtocolInfo » du service « ConnectionManager » du dispositif de substitution DSS considéré.

En alternative ou en complément, en l'absence d'une telle mesure, le dispositif de substitution DSS renvoie une erreur en réponse à l'action « SetAVTransportURI », lorsque le format de codage du contenu à restituer n'est disponible que par transcodage et en faisant appel aux modules de transcodage du système de transcodage SYST.

## Revendications

1. Procédé de transcodage d'un contenu à restituer par un premier dispositif de restitution de contenus (DMR1) connecté à un réseau, le procédé étant mis en oeuvre par un système de transcodage (SYST) et comprenant
- une étape d'émission, suite à une émission via ledit réseau d'un premier message d'annonce de la disparition du réseau du premier dispositif de restitution (DMR1), d'un message d'annonce signalant la présence dans ledit réseau d'un autre dispositif, dit dispositif de substitution (DSS), formant dispositif de restitution de contenus,
le dispositif de substitution étant déclaré comme un dispositif de restitution supportant au moins un format de codage non supporté par le premier dispositif de restitution,
- une étape de réception d'un premier ensemble d'au moins un paramètre de restitution d'un contenu à restituer, encodé dans un premier format de codage non supporté par le premier dispositif de restitution,
- une étape d'envoi au premier dispositif de restitution (DMR1) d'un deuxième ensemble d'au moins un paramètre de restitution à utiliser pour obtenir, auprès dudit système de transcodage (SYST), ledit contenu à restituer dans un deuxième format de codage supporté par le premier dispositif de restitution (DMR1).

2. Procédé de transcodage selon la revendication 1 dans lequel le premier ensemble comprend une adresse de localisation désignant une entité auprès de laquelle ledit contenu à restituer est susceptible d'être obtenu dans le premier format de codage, le deuxième ensemble comprenant une adresse de localisation désignant le système de transcodage (SYST) comme entité auprès de laquelle ledit contenu à restituer est susceptible d'être obtenu dans le deuxième format de codage.

3. Procédé de transcodage selon la revendication 1 comprenant
- une étape d'obtention auprès dudit premier dispositif de restitution (DMR1) d'une première liste d'au moins un format de codage supporté par le premier dispositif de restitution (DMR1),
- une étape de génération, à partir de la première liste, d'une deuxième liste d'au moins un format de codage supporté par le dispositif de substitution (DSS), comprenant au moins un format de codage non supporté par le premier dispositif de restitution (DMR1) mais susceptible d'être décodé par le système de transcodage et convertit en au moins un format de codage de la première liste.

4. Procédé de transcodage selon la revendication 1 comprenant
- une étape de réception en provenance du premier dispositif de restitution (DMR1) d'une requête d'accès audit contenu à restituer dans le deuxième format de codage ;
- une étape d'obtention dudit contenu à restituer dans le premier format de codage ;
- une étape de transcodage dudit contenu à restituer du premier format de codage dans le deuxième format de codage
- une étape d'envoi au premier dispositif de restitution (DMR1) dudit contenu à restituer dans le deuxième format de codage.

5. Procédé de transcodage selon la revendication 1, comprenant une étape de recherche d'un dispositif de restitution de contenus présent dans ledit réseau et une étape d'émission d'une demande de masquage à destination d'au moins un dispositif de restitution trouvé lors de l'étape de recherche,
le premier message d'annonce étant émis par ledit premier dispositif de restitution après réception d'une dite demande de masquage.

6. Procédé de transcodage selon la revendication 1, dans lequel le premier dispositif de restitution est identifié par une adresse fixe, le procédé comprenant une étape d'émission d'une requête à au moins un dispositif de restitution identifié par une adresse fixe,
le premier message d'annonce étant émis par le premier dispositif de restitution après réception d'une dite requête.

7. Procédé de transcodage selon la revendication 1, dans lequel le premier message d'annonce est émis par le système de transcodage suite à la réception d'un message d'annonce de la présence dans le réseau dudit dispositif de restitution de contenus.

8. Procédé de transcodage selon la revendication 1, comprenant une étape d'émission à travers ledit réseau d'un message concernant une description d'au moins un service mis en oeuvre par ledit dispositif de substitution, ladite description incluant la description du ou des services mis en oeuvre par le premier dispositif de restitution de contenus.

9. Procédé de transcodage selon la revendication 1, comprenant une étape de mise en oeuvre de moyens de détection de la disparition dudit premier dispositif de restitution (DMR1) configurés pour détecter une absence de réception, pendant un intervalle de temps prédéfini, d'un message ou d'une réponse à un message signalant la présence du premier dispositif de restitution (DMR1).

10. Système de transcodage d'un contenu à restituer par un premier dispositif de restitution de contenus (DMR1) connecté à un réseau, comprenant
- des moyens d'émission, suite à une émission via ledit réseau d'un premier message d'annonce de la disparition du réseau du premier dispositif de restitution (DMR1), d'un message d'annonce signalant la présence dans ledit réseau d'un autre dispositif, dit dispositif de substitution (DSS), formant dispositif de restitution de contenus,
le dispositif de substitution étant déclaré comme un dispositif de restitution supportant au moins un format de codage non supporté par le premier dispositif de restitution,
- des moyens de réception d'un premier ensemble d'au moins un paramètre de restitution d'un contenu à restituer, encodé dans un premier format de codage non supporté par le premier dispositif de restitution,
- des moyens d'envoi au premier dispositif de restitution (DMR1) d'un deuxième ensemble d'au moins un paramètre de restitution à utiliser pour obtenir, auprès dudit système de transcodage (SYST), ledit contenu à restituer dans un deuxième format de codage supporté par le premier dispositif de restitution (DMR1).

## Patentansprüche

1. Verfahren zur Umcodierung eines von einer an ein Netzwerk angeschlossenen ersten Inhaltswiedergabevorrichtung (DMR1) wiederzugebenden Inhalts, wobei das Verfahren von einem Umcodiersystem (SYST) durchgeführt wird und enthält
- einen Schritt des Sendens, nach einem Senden über das Netzwerk einer ersten Anzeigenachricht des Verschwindens der ersten Wiedergabevorrichtung (DMR1) vom Netzwerk, einer Anzeigenachricht, die das Vorhandensein einer anderen Vorrichtung, Ersatzvorrichtung (DSS) genannt, in dem Netzwerk signalisiert, die eine Inhaltswiedergabevorrichtung bildet, wobei die Ersatzvorrichtung als eine Wiedergabevorrichtung angegeben wird, die mindestens ein Codierformat unterstützt, das nicht von der ersten Wiedergabevorrichtung unterstützt wird,
- einen Schritt des Empfangs einer ersten Einheit mindestens eines Wiedergabeparameters eines wiederzugebenden Inhalts, codiert in einem ersten Codierformat, das nicht von der ersten Wiedergabevorrichtung unterstützt wird,
- einen Schritt des Sendens an die erste Wiedergabevorrichtung (DMR1) einer zweiten Einheit mindestens eines Wiedergabeparameters, der zu verwenden ist, um beim Umcodiersystem (SYST) den wiederzugebenden Inhalt in einem zweiten Codierformat zu erhalten, das von der ersten Wiedergabevorrichtung (DMR1) unterstützt wird.

2. Umcodierverfahren nach Anspruch 1, wobei die erste Einheit eine Lokalisierungsadresse enthält, die eine Entität bezeichnet, bei der der wiederzugebende Inhalt im ersten Codierformat erhalten werden kann, wobei die zweite Einheit eine Lokalisierungsadresse enthält, die das Umcodiersystem (SYST) als Entität bezeichnet, bei der der wiederzugebende Inhalt im zweiten Codierformat erhalten werden kann.

3. Umcodierverfahren nach Anspruch 1, das enthält
- einen Schritt des Erhalts bei der ersten Wiedergabevorrichtung (DMR1) einer ersten Liste mindestens eines Codierformats, das von der ersten Wiedergabevorrichtung (DMR1) unterstützt wird,
- einen Schritt der Erzeugung, ausgehend von der ersten Liste, einer zweiten Liste mindestens eines Codierformats, das von der Ersatzvorrichtung (DSS) unterstützt wird, die mindestens ein Codierformat enthält, das nicht von der ersten Wiedergabevorrichtung (DMR1) unterstützt wird, aber vom Umcodiersystem decodiert werden kann und in mindestens ein Codierformat der ersten Liste konvertiert.

4. Umcodierverfahren nach Anspruch 1, das enthält
- einen Schritt des Empfangs von der ersten Wiedergabevorrichtung (DMR1) kommend einer Zugangsanforderung zum wiederzugebenden Inhalt im zweiten Codierformat;
- einen Schritt des Erhalts des wiederzugebenden Inhalts im ersten Codierformat;
- einen Schritt der Umcodierung des wiederzugebenden Inhalts vom ersten Codierformat in das zweite Codierformat;
- einen Schritt des Sendens an die erste Wiedergabevorrichtung (DMR1) des wiederzugebenden Inhalts im zweiten Codierformat.

5. Umcodierverfahren nach Anspruch 1, das einen Schritt der Suche einer im Netzwerk vorhandenen Inhaltswiedergabevorrichtung und einen Schritt des Sendens einer Maskierungsanforderung an mindestens eine Wiedergabevorrichtung enthält, die beim Suchschritt gefunden wird,
wobei die erste Anzeigenachricht von der ersten Wiedergabevorrichtung nach Empfang einer Maskierungsanforderung gesendet wird.

6. Umcodierverfahren nach Anspruch 1, wobei die erste Wiedergabevorrichtung durch eine ortsfeste Adresse identifiziert wird, wobei das Verfahren einen Schritt des Sendens einer Anforderung an mindestens eine Wiedergabevorrichtung enthält, die durch eine ortsfeste Adresse identifiziert wird,
wobei die erste Anzeigenachricht von der ersten Wiedergabevorrichtung nach Empfang einer solchen Anforderung gesendet wird.

7. Umcodierverfahren nach Anspruch 1, wobei die erste Anzeigenachricht vom Umcodiersystem nach dem Empfang einer Anzeigenachricht des Vorhandenseins der Inhaltswiedergabevorrichtung im Netzwerk gesendet wird.

8. Umcodierverfahren nach Anspruch 1, das einen Schritt des Sendens einer Nachricht über das Netzwerk enthält, die eine Beschreibung mindestens eines Diensts betrifft, der von der Ersatzvorrichtung durchgeführt wird, wobei die Beschreibung die Beschreibung des Diensts oder der Dienste umfasst, die von der ersten Inhaltswiedergabevorrichtung durchgeführt werden.

9. Umcodierverfahren nach Anspruch 1, das einen Schritt der Anwendung von Erfassungseinrichtungen des Verschwindens der Wiedergabevorrichtung (DMR1) enthält, die konfiguriert sind, eine Empfangsabwesenheit einer Nachricht oder einer Antwort auf eine Nachricht während eines vordefinierten Zeitintervalls zu erfassen, die das Vorhandensein der ersten Wiedergabevorrichtung (DMR1) signalisiert.

10. Umcodiersystem eines durch eine an ein Netzwerk angeschlossene erste Inhaltswiedergabevorrichtung (DMR1) wiederzugebenden Inhalts, das enthält
- Einrichtungen zum Senden, nach einem Senden über das Netzwerk einer ersten Anzeigenachricht des Verschwindens der ersten Wiedergabevorrichtung (DMR1) vom Netzwerk, einer Anzeigenachricht, die das Vorhandensein in dem Netzwerk einer anderen Vorrichtung, Ersatzvorrichtung (DSS) genannt, signalisiert, die eine Inhaltswiedergabevorrichtung bildet, wobei die Ersatzvorrichtung als eine Wiedergabevorrichtung angegeben wird, die mindestens ein Codierformat unterstützt, das nicht von der ersten Wiedergabevorrichtung unterstützt wird,
- Einrichtungen zum Empfang einer ersten Einheit mindestens eines Wiedergabeparameters eines wiederzugebenden Inhalts, codiert in einem ersten Codierformat, das nicht von der ersten Wiedergabevorrichtung unterstützt wird,
- Einrichtungen zum Senden an die erste Wiedergabevorrichtung (DMR1) einer zweiten Einheit mindestens eines Wiedergabeparameters, der zu verwenden ist, um beim Umcodiersystem (SYST) den wiederzugebenden Inhalt in einem zweiten Codierformat zu erhalten, das von der ersten Wiedergabevorrichtung (DMR1) unterstützt wird.

## Claims

1. Method for transcoding a content to be rendered by a first contents rendering device (DMR1) connected to a network, the method being implemented by a transcoding system (SYST) and comprising
- a step of emitting, subsequent to an emission via said network of a first message of announcement of the disappearance of the network of the first rendering device (DMR1), an announcement message signalling the presence in said network of another device, termed substitution device (DSS), forming a contents rendering device,
the substitution device being declared as a rendering device supporting at least one coding format not supported by the first rendering device,
- a step of receiving a first set of at least one rendering parameter of a content to be rendered, encoded in a first coding format not supported by the first rendering device,
- a step of dispatching to the first rendering device (DMR1) a second set of at least one rendering parameter to be used to obtain, from said transcoding system (SYST), said content to be rendered in a second coding format supported by the first rendering device (DMR1) .

2. Transcoding method according to Claim 1, in which the first set comprises a location address designating an entity from which said content to be rendered is able to be obtained in the first coding format, the second set comprising a location address designating the transcoding system (SYST) as entity from which said content to be rendered is able to be obtained in the second coding format.

3. Transcoding method according to Claim 1, comprising
- a step of obtaining from said first rendering device (DMR1) a first list of at least one coding format supported by the first rendering device (DMR1),
- a step of generating, on the basis of the first list, a second list of at least one coding format supported by the substitution device (DSS), comprising at least one coding format not supported by the first rendering device (DMR1) but able to be decoded by the transcoding system and converted into at least one coding format of the first list.

4. Transcoding method according to Claim 1, comprising
- a step of receiving from the first rendering device (DMR1) a request for access to said content to be rendered in the second coding format;
- a step of obtaining said content to be rendered in the first coding format;
- a step of transcoding said content to be rendered from the first coding format into the second coding format;
- a step of dispatching said content to be rendered in the second coding format to the first rendering device (DMR1).

5. Transcoding method according to Claim 1, comprising a step of searching for a contents rendering device present in said network and a step of emitting a masking demand to at least one rendering device found during the search step,
the first announcement message being emitted by said first rendering device after reception of a said masking demand.

6. Transcoding method according to Claim 1, in which the first rendering device is identified by a fixed address, the method comprising a step of emitting a request to at least one rendering device identified by a fixed address,
the first announcement message being emitted by the first rendering device after reception of a said request.

7. Transcoding method according to Claim 1, in which the first announcement message is emitted by the transcoding system subsequent to the reception of a message of announcement of the presence in the network of said contents rendering device.

8. Transcoding method according to Claim 1, comprising a step of emitting through said network a message relating to a description of at least one service implemented by said substitution device, said description including the description of the service or services implemented by the first contents rendering device.

9. Transcoding method according to Claim 1, comprising a step of implementing means for detecting the disappearance of said first rendering device (DMR1) which are configured to detect an absence of reception, during a predefined time interval, of a message or of a response to a message signalling the presence of the first rendering device (DMR1).

10. System for transcoding a content to be rendered by a first contents rendering device (DMR1) connected to a network, comprising
- means for emitting, subsequent to an emission via said network of a first message of announcement of the disappearance of the network of the first rendering device (DMR1), an announcement message signalling the presence in said network of another device, termed substitution device (DSS), forming a contents rendering device,
the substitution device being declared as a rendering device supporting at least one coding format not supported by the first rendering device,
- means for receiving a first set of at least one rendering parameter of a content to be rendered, encoded in a first coding format not supported by the first rendering device,
- means for dispatching to the first rendering device (DMR1) a second set of at least one rendering parameter to be used to obtain, from said transcoding system (SYST), said content to be rendered in a second coding format supported by the first rendering device (DMR1) .
